# EUROPEAN PATENT APPLICATION

(11) **EP 1 357 164 A2**
(43) Date of publication of application: **29.10.2003**
(21) Application number: 03008823.1
(22) Date of filing: 24.04.2003
(51) Int. Cl.: C10G 11/18

(54) **Liquid feed atomization**

(30) Priority: 24.04.2002 US 131377
(71) Applicant: ConocoPhillips Company, Bartlesville, OK 74004 (US)
(72) Inventor: WElls, Jan W., Bartlesville, Oklahoma 74006 (US); Smith, Dean P., Taylor Lake Village, TX 77586 (US); Wardinski, Michael D., Bartlesville, Oklahoma 74006 (US)
(74) Representative: Geissler, Bernhard, Dr. jur., Dipl.-Phys.

(57) **Abstract**

A novel process for atomizing a liquid stream is disclosed and includes introducing the liquid to a nozzle including a fluid conduit, an outlet orifice and swirl-imparting means thereby at least partially atomizing the liquid stream to form an atomized liquid stream. Preferably, the atomized liquid stream does not contact a fluid deflecting device upon exit from the outlet orifice. This novel process can be utilized in a fluidized catalytic cracking process prior to contact with a fluidized catalyst or in a coking process for atomizing an oil stream.

## Description

The present invention relates to the atomization of a liquid stream. In another aspect, the invention relates to a method for atomizing and uniformly distributing an oil feed stream in a coker unit, or into a stream of fluidized catalyst in a fluidized catalytic cracking (FCC) unit.

### Background of the Invention

The process of atomizing a liquid stream for such purposes as rapid cooling of the liquid (artificial snow making) or enhanced contact of the atomized liquid with another medium, such as a fluidized catalyst, is well known in the art. It would clearly be desirable to provide an improved process for atomizing a liquid stream.

A specific example of an atomization process is the atomization of an oil stream in an FCC unit prior to contacting the oil stream with a fluidized catalyst. Typical FCC unit operations are described below.

Fluidized catalytic cracking of heavy petroleum fractions to produce products such as gasoline and heating oils is well known in the art. In fluidized catalytic cracking, heavy petroleum fractions are often preheated prior to contact with hot, fluidized catalyst particles in a riser reactor. The contact time in the riser reactor is generally in the order of a few seconds. The relatively short contact time encourages the production of gasoline and heating oil range hydrocarbons. Longer contact times can result in overcracking to undesirable end products, such as methane and coke. Important aspects of contacting the heavy petroleum fraction with the fluidized catalyst include the atomization of the heavy petroleum fraction and uniform distribution of the atomized heavy petroleum fraction within the fluidized catalyst. Non-uniform distribution of the heavy petroleum fraction in the fluidized catalyst can lead to localized regions of high catalyst-to-oil ratios and overcracking. Also, poor atomization of the heavy petroleum fraction can lead to localized regions of low catalyst-to-oil ratios resulting in wetting of the catalyst which results in increased coke laydown. In addition, if the heavy petroleum fraction is not sufficiently atomized and does not directly contact the fluidized catalyst upon injection into the riser reactor, then thermal cracking can occur instead of catalytic cracking. Thermal cracking can result in the generation of the undesirable end products of methane and coke. Excess coke is undesirable because the process duties of the stripper and regenerator are increased and the coke can be deposited on the surfaces of the equipment involved. It would be clearly desirable to provide a process in which an oil feed stream comprising a heavy petroleum fraction is sufficiently atomized and uniformly distributed within a fluidized catalyst in a fluidized catalytic cracking process.

### Summary of the Invention

It is an object of the present invention to provide a method of atomizing a liquid stream in a manner that increases the atomization efficiency.

It is yet another object of the present invention to improve the efficiency of FCC operations.

It is still another object of the present invention to improve the efficiency of coker operations by improving the atomization and distribution of the oil feed stream prior to introduction into a coking reactor.

Another object of the present invention is to provide a method for atomizing an oil feed stream for catalytic conversion.

A yet further object of the present invention is to provide a method for atomizing and uniformly distributing an oil feed stream into a fluidized catalyst.

In accordance with the present invention, a method for atomizing a liquid stream comprises introducing the liquid stream and introducing an atomizing enhancing medium to the inlet of a nozzle comprising a fluid conduit having an outlet orifice having a diameter and swirl-imparting means within the conduit for imparting a rotational component of motion to liquid flowing therethrough wherein the swirl-imparting means has an opening therethrough transversely of the fluid conduit which is substantially smaller than the outlet orifice and is in coaxial alignment therewith, the swirl-imparting means including sinusoidal portions in edge-to-edge relation spanning adjacent semi-circular segments of the fluid conduit, each sinusoidal portion including convex and concave lobes, the convex lobes being disposed toward the inlet end of the conduit and the concave lobes being offset axially from the convex lobes a distance approximately equal to the diameter of the outlet orifice, the convex and concave lobes being in alternate circumferential sequence in the fluid conduit. and withdrawing the liquid stream and the atomizing enhancing medium from the outlet orifice of the nozzle thereby at least partially atomizing the liquid stream to form an atomized liquid stream; wherein the atomized liquid stream does not contact a fluid deflecting device upon exit from the outlet orifice.

Other objects and advantages of the invention will be apparent from the detailed description of the invention and the appended claims.

### Brief Description of the Drawings

FIG. 1 is an elevational view of a nozzle useful in relation to this invention.
FIG. 2 is a top plan view of the nozzle of FIG. 1.
FIG. 3 is a cross-sectional view taken along line 3--3 of FIG. 2.
FIG. 4 is a bottom plane view as seen from line 4--4 of FIG. 3.
FIG. 5 is a perspective view partly in section of the spray nozzle shown in FIG. 1.
FIG. 6 schematically illustrates certain features of one type of FCC unit embodying certain features of the nozzle of the present invention.
FIG. 7 is an enlarged cut-away view showing in greater detail certain features of the feed injection zone of the FCC unit shown in FIG. 6.
FIG. 8 is an enlarged cross-sectional view taken along line 8 - 8 of FIG. 7 showing in greater detail certain features of the feed injection zone shown in FIG.'s 6 and 7.
FIG. 9 is an elevational view showing the nozzle of FIG. 1 having attached thereto a horn typically used with such nozzle by those skilled in the FCC art.
FIG. 10 is a plot of radial distance vs. GPM/Ft.² showing the distribution of a water spray upon exit from the nozzle of FIG. 9.
FIG. 11 is a plot of radial distance vs. GPM/Ft.² showing the distribution of a water spray upon exit from the nozzle of FIG.'s 1 - 5.

### Detailed Description of the Invention

The apparatus and process of the present invention will be described with reference to the drawings. Reference to the specific configurations of the drawings is not meant to limit the invention to the details of the drawings disclosed in conjunction therewith.

The nozzle useful in the present invention comprises, consists of, or consists essentially of a fluid conduit having an outlet orifice and swirl-imparting means within the fluid conduit. The swirl-imparting means can impart a rotational component of motion to liquid flowing therethrough. More particularly, the nozzle does not have a horn or other fluid deflecting device at the outlet of the outlet orifice.

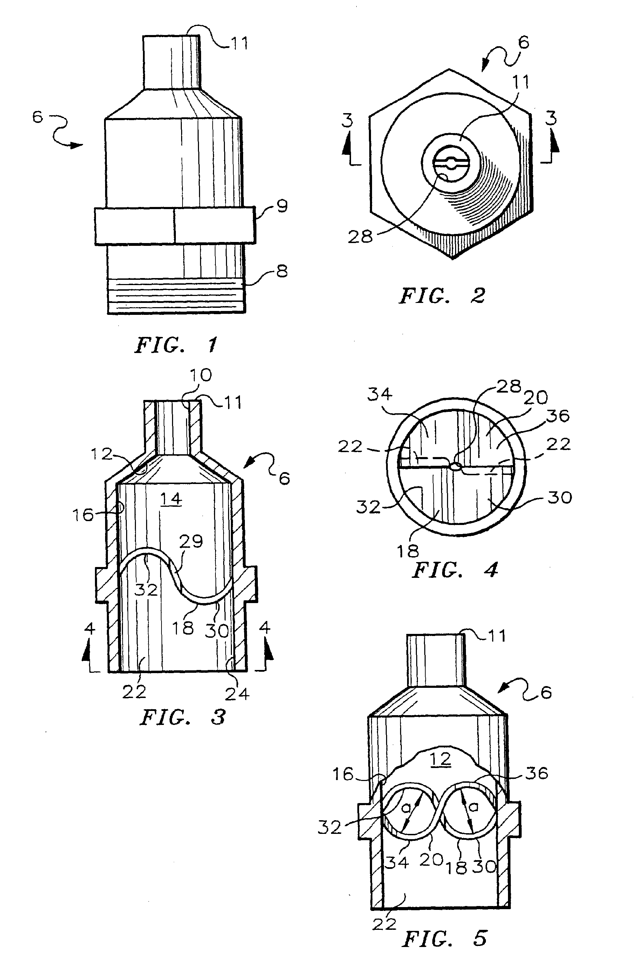

In a preferred embodiment, and referring in detail to FIG.'s 1 - 5, the nozzle 6 can be a tubular unitary body of any desirable external configuration. As shown, the nozzle is preferably externally threaded at its inlet end 8 and a polygonal drive flange 9 can be provided for engagement by a wrench when it is desired to tighten the nozzle in a threaded fitting. The outlet end of the nozzle has an outlet orifice 10 of cylindrical configuration which extends through the outer end wall 11 of the nozzle and intersects with frustoconical surface 12 (FIG. 3), which constitutes the upper wall of a mixing or outlet chamber 14. The outlet chamber 14 is also defined by the inner diameter or cylindrical bore 16 of the nozzle.

Swirl-imparting means can be provided by transversely extending vanes 18 and 20 which separate the mixing chamber 14 from inlet chamber 22 whose inner wall 24 is a continuation of bore 16.

A liquid stream is introduced to the inlet end of nozzle 6. An atomizing enhancing medium is also introduced to the inlet end of nozzle 6.

The liquid stream and atomizing enhancing medium are preferably introduced to the nozzle as a turbulent mixture. The liquid stream is preferably an oil stream and the atomizing enhancing medium is preferably steam.

The liquid stream and atomizing enhancing medium mixture passes through the swirl-imparting means in bore 16, comprising, consisting of, or consisting essentially of vanes 18 and 20, for imparting a rotational component of motion to liquid flowing therethrough, thus creating an annular-mist flow mixture. The annular-mist flow mixture is preferably substantially circumferentially uniform within the nozzle. The term "annular-mist flow mixture", as used herein, means a mixture of a gas and a liquid wherein a liquid layer flows along the circumference of the interior of a conduit and the gas, along with some vaporized liquid, flows down the center of the conduit.

A central opening 28 (Fig 4.) defined by the vanes 18 and 20 has an open area approximately 5-20 percent of the area of the outlet orifice 10, depending upon the desired distribution of atomized liquid in the spray pattern.

Vanes 18 and 20 comprise two generally semi-circular segments (FIG. 4), when viewed in the direction of fluid flow through the nozzle. As shown by the dashed lines at 22, the vanes 18 and 20 preferably overlap circumferentially to some extent on diametrically opposite sides of the opening 28 to insure against direct axial flow of the annular portion of the flow pattern. Each vane 18 and 20 has an identical arcuate recess 29 (FIG. 3), provided along its inner edge, by which the generally elliptical central opening 28 is defined.

Viewed in the direction of fluid flow (FIG. 4), vane 18 has a convex lobe 30, in one quadrant of the passage facing upstream and a concave lobe 32 in the adjacent quadrant. Similarly, vane 20 has a convex lobe 34 in a quadrant of the passage diametrically opposite convex lobe 30 of the vane 18 and a concave lobe 36 in a quadrant diametrically opposite concave lobe 32 of the vane 18. The vanes18 and 20 are thus each approximately sinusoidal.

It will be noted that the two vanes 18 and 20 are juxtaposed in substantially edge-to-edge relation defining a figure "8" which extends horizontally across the bore of the nozzle as shown in FIG. 4. The two semi-cylindrical limbs of each loop of the figure "8" are offset from one quadrant to the adjacent quadrant of the bore 16 and thus provide an unobstructed opening facing transversely of the nozzle bore of diameter designated by the reference character *a* (FIG. 5) sufficient to permit free passage therethrough of a sphere or ball having a diameter approximately equal to the diameter *a*. The dimension *a*, known as the "free passage diameter" lies in a radially extending plane of the nozzle and is approximately equal to the diameter of the outlet orifice 10. It is important, moreover, that the cross sectional area of the bore 16 be approximately 5-6 times the area of the orifice 10. Furthermore, the free passage diameter *a* should preferably be in the range of from about 40 to about 60 percent of the diameter of the bore 16.

The liquid stream and atomizing enhancing medium are withdrawn from nozzle 6 through outlet orifice 10 thereby at least partially atomizing the liquid stream to form an atomized liquid stream. The atomized liquid stream is then uniformly distributed into a medium such as, but not limited to, air or a fluidized catalyst.

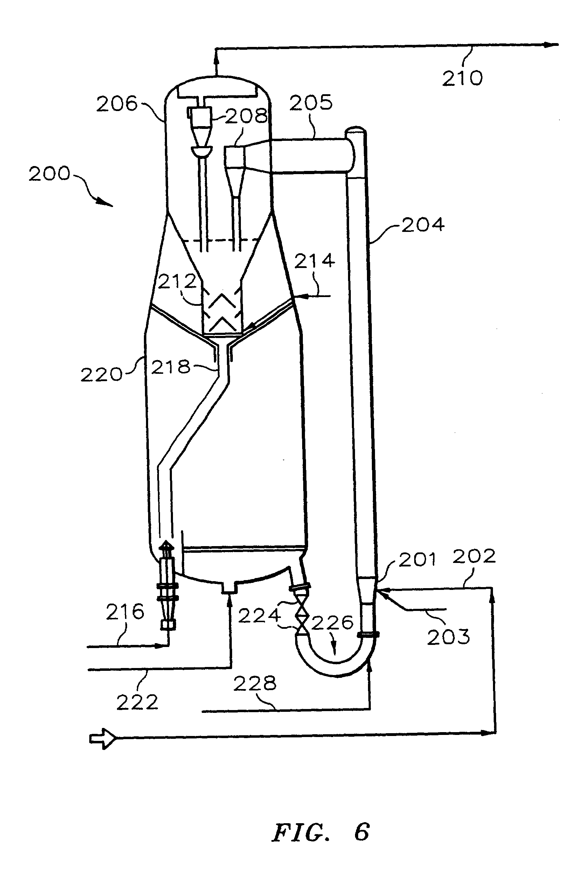

FIG. 6 shows one type of FCC unit 200 which comprises a feed injection zone 201 having incorporated therein the nozzle 6 of FIG. 1. Feed injection zone 201 is connected in fluid flow communication with an oil feed line 202, an atomizing enhancing medium line 203 and a riser reactor 204. A conduit 205 connects riser reactor 204, in fluid flow communication, with a catalyst/product separation zone 206 which typically contains at least one and preferably a plurality of cyclone separators 208 and is connected in fluid flow communication with a conduit 210 for withdrawal of an overhead product from catalyst/product separation zone 206. Catalyst/product separation zone 206 is connected in fluid flow communication with a stripping section 212 in which gas, preferably steam, is introduced from lines 214 and 216 and strips entrained hydrocarbon from spent catalyst. Conduit or stand pipe 218 connects stripping section 212, in fluid flow communication, with a regeneration zone 220. Regeneration zone 220 is connected in fluid flow communication with a conduit 222 for introducing air to regeneration zone 220. Manipulative valve 224 (preferably a slide valve) connects regeneration zone 220, in fluid flow communication, with a catalyst conveyance zone 226. Catalyst conveyance zone 226 is connected in fluid flow communication with the feed injection zone 201. Catalyst conveyance zone 226 is also connected in fluid flow communication with a conduit 228 for introducing fluidizing gas into catalyst conveyance zone 226.

Referring to FIG.'s 7 and 8, therein is illustrated, in greater detail, feed injection zone 201 from FIG. 6 including a frustroconical section 230, a typical guide 232 and the nozzle 6.

The frustoconical section 230 is situated in an inverted manner and has a centerline axis 234. That is, the frustom end is situated below the base end, and the frustom and base ends are open to flow through the frustoconical section 230.

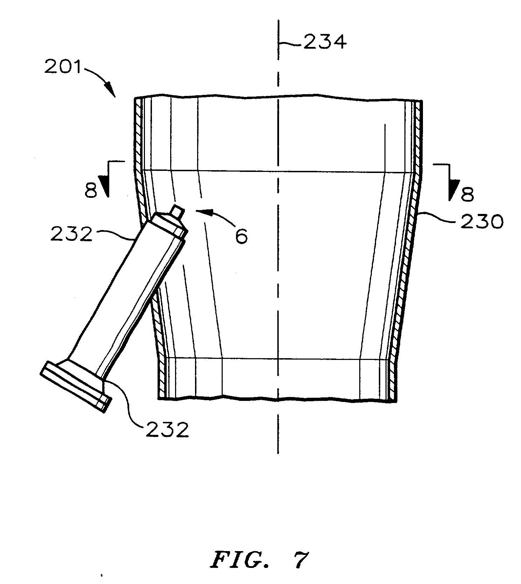

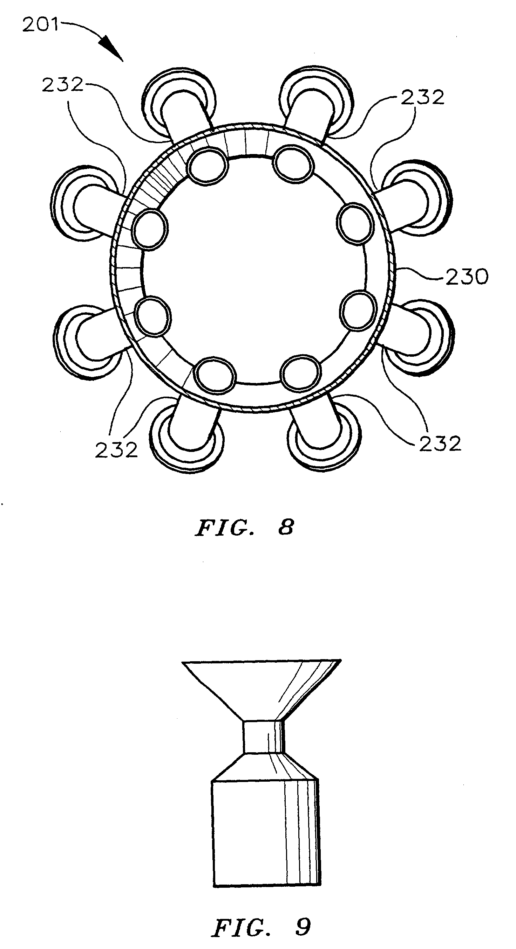

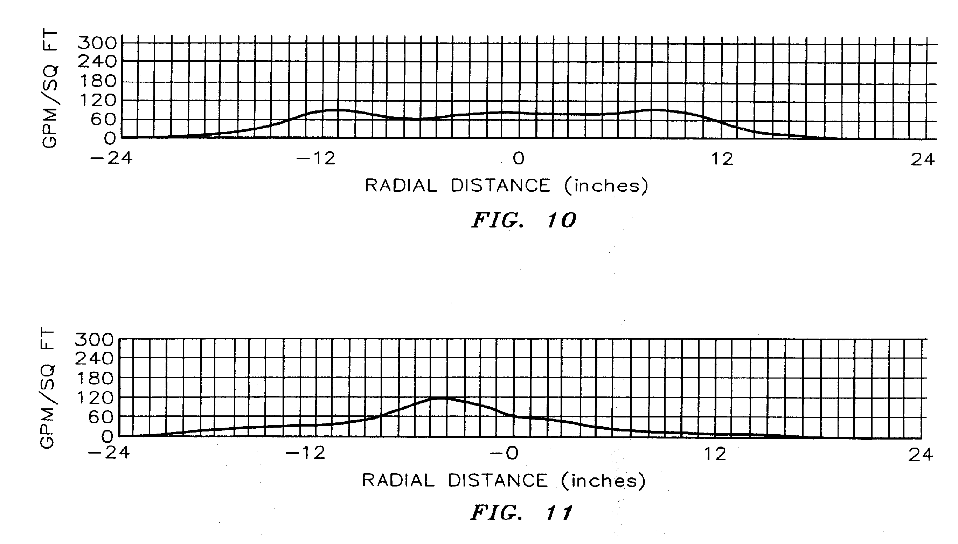

In one embodiment, FIG. 8 is a downwardly looking sectional view of feed injection zone 200 which illustrates the configuration of a plurality of guides 232 about frustoconical section 230 in which the nozzles 6 (not depicted in FIG. 8) are positioned. Referring again to FIG. 7, nozzle 6 is fixedly secured to guide 232 and is in fluid flow communication with frustoconical section 230 of the feed injection zone 201. Nozzle 6 can be fixedly secured to guide 232 by any means sufficient to provide a suitable seal. Preferably, nozzle 6 is either welded, bolted or threaded to guide 232.

Regarding the operation of the FCC unit 20, and referring again to FIG. 6, an oil stream and an atomizing enhancing medium are introduced to feed injection zone 201 through lines 202 and 203, respectively, for contact with regenerated fluidized catalyst from catalyst conveyance zone 226 (described in greater detail below). The contacting of the oil stream with the regenerated catalyst catalyzes the conversion of the oil stream to gasoline range and lighter hydrocarbons as the mixture passes up the riser reactor 204. As the oil stream is cracked the catalyst is progressively deactivated by the accumulation of hydrocarbons and coke on the surface and in the interstitial spaces of the catalyst. This partially deactivated catalyst is thereafter referred to as spent catalyst and passes from riser reactor 204 to catalyst/product separation zone 206 via conduit 205. Hydrocarbon product gases and spent catalyst separate in catalyst/product separation zone 206 and the hydrocarbon product gases exit through conduit 210 with the spent catalyst flowing downwardly. The spent catalyst passes down through stripping section 212 and is stripped of its hydrocarbons by counter flowing stripping gas from conduits 214 and 216. The stripped catalyst flows downwardly to regeneration zone 220 via conduit 218 where the stripped catalyst is reactivated by burning off any remaining coke deposits with air supplied via conduit 222. The regenerated catalyst then flows to the catalyst conveyance zone 226 wherein fluidizing gas from conduit 228, preferably steam, fluidizes the regenerated catalyst and aids in passing the regenerated catalyst to the feed injection zone 201.

Referring again to FIG. 7, the oil stream and atomizing enhancing medium are introduced to the inlet of the nozzle 6 and exit from nozzle 6 as an atomized oil stream, as described above.

The atomized oil stream is then uniformly distributed by nozzle 6 into the regenerated fluidized catalyst from catalyst conveyance zone 226 (FIG. 6) which is flowing through the frustoconical section 230 (FIG. 7) of the feed injection zone 201.

### Example

Nozzles were tested for their effectiveness in atomization and patternization (distribution) of a liquid in two-phase (liquid/gas) flow.

Presently, when a Maxipass nozzle for FCC service from BETE is supplied, a horn or bell is attached to the nozzle outlet which is thought by the supplier to improve patternization. Such horn or bell is shown in Fig. 9.

### Control Nozzle

A liquid water/air mixture was introduced to the control nozzle (as shown in FIG. 9) at a water flow rate and pressure of 245 gpm and 36 psi, respectively; and at an air flow rate and pressure of 790 scfm (standard cubic feet per minute) and 44.3 psi, respectively. The exiting atomized liquid was tested for atomization using a Speedview 760 Analysis system manufactured by Greenfield Instruments ("Speedview Analyzer"). The Speedview Analyzer measures droplet diameters and plots them into size distribution plots from which a Sauter mean diameter is calculated. The Sauter mean diameter is the diameter of a drop which has the same surface to volume ratio as the total drop population. Higher surface to volume ratios are desirable so as to maximize contact of the atomized liquid with the medium into which it is atomized (such as, for example, the fluidized catalyst in an FCC unit). Surface area to volume is inversely proportional to the diameter of the droplets. Thus, smaller diameter droplets have a higher surface area to volume ratio as compared to larger diameter droplets. Therefore, a smaller Sauter mean diameter is desirable.

In a separate experiment, a liquid water/air mixture was introduced to the control nozzle at a water flow rate and pressure of 245 gpm and 35.7 psi, respectively; and at an air flow rate and pressure of 790 scfm and 43.8 psi, respectively. The exiting atomized liquid was tested for patternization using a Shop Patternator 770 device ("Patternator") for a duration of 2 seconds. The Patternator measures the GPM/square foot at radial distances from the centerline of the nozzle outlet. Results from the droplet diameter analysis and patternization tests for the control nozzle are presented in the Table and in Fig. 10, respectively.

### Inventive Nozzle

A liquid water/air mixture was introduced to the inventive nozzle (in this case the Maxipass nozzle with the horn structure removed therefrom) at a water flow rate and pressure of 245 gpm and 36 psi, respectively; and at an air flow rate and pressure of 790 scfm and 44.3 psi, respectively. The exiting atomized liquid was tested for atomization using the Speedview Analyzer.

A liquid water/air mixture was introduced to the inventive nozzle at a water flow rate and pressure of 245 gpm and 36 psi, respectively; and at an air flow rate and pressure of 790 scfm and 44.3 psi, respectively. The exiting atomized liquid was tested for patternization using the Patternator for a duration of 3 seconds.

Results from the droplet diameter analysis and patternization tests for the inventive nozzle are presented in the Table and in FIG. 11, respectively.

**Table**

| | Control Nozzle | Inventive Nozzle |
|---|---|---|
| Arithmetic mean diameter, microns | 210.2 | 178.8 |
| Surface mean diameter, microns | 294.6 | 213.1 |
| Volume mean diameter, microns | 427.8 | 257.6 |
| Sauter mean diameter, microns | 918.6 | 382.8 |
| Vol. % of droplets with diameter greater than 1000 microns | 65.9 | 14.0 |

As can be seen from the data in the Table, the Sauter mean diameter using the inventive nozzle is around 58% lower than the Sauter mean diameter using the control nozzle and the vol. % of droplets having a diameter greater than 1000 microns using the inventive nozzle is around 79% lower than the vol. % of droplets having a diameter greater than 1000 microns using the control nozzle. This significant reduction in droplet size represents a major improvement in atomization efficiency.

Also, as shown in Fig.'s 10 and 11, the patternization using the control nozzle was basically bimodal whereas the patternization using the inventive nozzle was unimodal, which is preferred, because unimodal distribution results in a more uniform distribution of droplets throughout the cone of the spray.

Whereas this invention has been described in terms of the preferred embodiments, reasonable variations and modifications are possible by those skilled in the art. Such modifications are within the scope of the described invention and appended claims.

## Claims

1. A method for atomizing a liquid stream comprising introducing said liquid stream and introducing an atomizing enhancing medium to the inlet of a nozzle comprising a fluid conduit having an outlet orifice having a diameter and swirl-imparting means within said conduit for imparting a rotational component of motion to liquid flowing therethrough; wherein said swirl-imparting means has an opening therethrough transversely of said fluid conduit which is substantially smaller than said outlet orifice and is in coaxial alignment therewith, said swirl-imparting means including sinusoidal portions in edge-to-edge relation spanning adjacent semi-circular segments of said fluid conduit, each sinusoidal portion including convex and concave lobes, said convex lobes being disposed toward the inlet end of said conduit and said concave lobes being offset axially from said convex lobes a distance approximately equal to the diameter of said outlet orifice, said convex and concave lobes being in alternate circumferential sequence in said fluid conduit; and
withdrawing said liquid stream and said atomizing enhancing medium from said outlet orifice of said nozzle thereby at least partially atomizing said liquid stream to form an atomized liquid stream; wherein said atomized liquid stream does not contact a fluid deflecting device upon exit from said outlet orifice.

2. The method of claim 1, wherein a spherical ball having a diameter approximately equal to the diameter of said outlet orifice is capable of passing between the axially offset lobes of said swirl-imparting means, in particular wherein the diameter of said spherical ball is in the range of from 40 to 60 percent of the diameter of said fluid conduit.

3. The method of claim 1, wherein said sinusoidal portions have circumferentially overlapping inner edge portions and wherein each of said inner edge portions has an arcuate recess to form an opening through said sinusoidal portions, in particular wherein said opening through said sinusoidal portions has a cross sectional area that is 5 to 20 percent of the cross sectional area of said outlet orifice; and wherein said opening is in axial alignment with said outlet orifice.

4. The method of claim 1, wherein the cross sectional area of said fluid conduit is 5 to 6 times the cross sectional area of said outlet orifice.

5. The method of claim 1, wherein said liquid stream and said atomizing enhancing medium are introduced to said nozzle as a turbulent mixture.

6. The method of claim 5, wherein said turbulent mixture passes through said swirl-imparting means creating an annular-mist flow mixture, in particular wherein said annular-mist flow mixture is withdrawn from said nozzle thereby at least partially atomizing said liquid stream to form said atomized liquid stream, or wherein said annular-mist flow mixture is substantially circumferentially uniform within said nozzle.

7. The method of claim 1, wherein said atomizing enhancing medium is steam.

8. The method of claim 1, wherein said liquid stream is an oil stream.

9. The method of claim 1, wherein said atomized liquid stream is uniformly distributed into a fluidized catalyst upon exit from said nozzle.

10. The method of claim 1, wherein said atomized liquid stream is uniformly distributed into a fluidized catalyst upon exit from said nozzle within a fluidized catalytic cracking unit.
